# EUROPÄISCHE PATENTANMELDUNG

(11) **EP 4 163 044 A1**
(43) Veröffentlichungstag der Anmeldung: **12.04.2023**
(21) Anmeldenummer: 21201667.9
(22) Anmeldetag: 08.10.2021
(51) Int. Cl.: B23K 20/10, B29C 65/08

(54) **SONOTRODENLAGER FÜR EINE ULTRASCHALL-SCHWEISSEINRICHTUNG**

(71) Anmelder: Novatec GmbH, 65795 Hattersheim (DE)
(72) Erfinder: Fink, Daniel, 65428 Rüsselsheim (DE); Bingel, Markus, 61130 Nidderau (DE); Skledar, Boris, 65527 Niedernhausen (DE)
(74) Vertreter: Herrmann, Daniel

(57) **Zusammenfassung**

Diese Erfindung betrifft ein Sonotrodenlager für eine Ultraschall-Schweißeinrichtung. Das Lager umfasst: ein Rahmen, wobei der Rahmen eine Öffnung zur Aufnahme der Sonotrode zumindest teilweise abgrenzt; wobei der Rahmen im Bereich der Öffnung ausgelegt ist, die Sonotrode in der Öffnung zu lagern; wobei der Rahmen derart ausgelegt ist, dass, durch Einwirken einer Kraft von der Sonotrode auf einen ersten Abschnitt des Rahmens, sich der Rahmen derart verformt, dass dadurch ein zweiter Abschnitt des Rahmens in die Öffnung hinein bewegt wird, wobei der zweite Abschnitt von dem ersten Abschnitt verschieden ist.

## Beschreibung

### Technisches Gebiet

Die hier beschriebene Erfindung betrifft ein Lager für eine Sonotrode einer Ultraschall-Schweißeinrichtung, ein Kit für eine Ultraschall-Schweißeinrichtung, eine Sonotrode zur Verwendung mit dem Lager oder dem Kit, eine Ultraschall-Schweißeinrichtung, ein Verfahren zum Nachrüsten einer Sonotrode einer Ultraschall-Schweißerrichtung, und eine Verwendung des Lagers oder des Kits zum Lagern einer Sonotrode einer Ultraschall-Schweißeinrichtung.

### Hintergrund

Bekannte, oftmals als Schweißzange ausgeführte Ultraschall-Schweißeinrichtungen, weisen eine in einer Halterung austauschbar angeordnete Sonotrode auf. Dieser Sonotrode ist üblicherweise mittels einer Schraubverbindung, die eine Vorspannkraft erzeugt, an der Halterung fixiert. Diese Fixierung soll verhindern, dass bei Betrieb der Ultraschall-Schweißeinrichtung unter Last, insbesondere durch die Längsschwingungen der Sonotrode in Richtung der Haupt-Schwingungsrichtung der Sonotrode, Bewegungen der Sonotrode in vertikaler Richtung oder horizontaler Richtung sowie Rotationen der Sonotrode um die Längsachse der Sonotrode auftreten und den Schweißvorgangs negativ beeinträchtigen. Ein Auftreten derartiger Bewegungen oder Rotationen der Sonotrode könnte ansonsten dazu führen, dass der gewünschte Ultraschall-Schweißvorgang, der zwischen Sonotrode und Amboss stattfindet, nicht verlässlich durchgeführt werden kann.

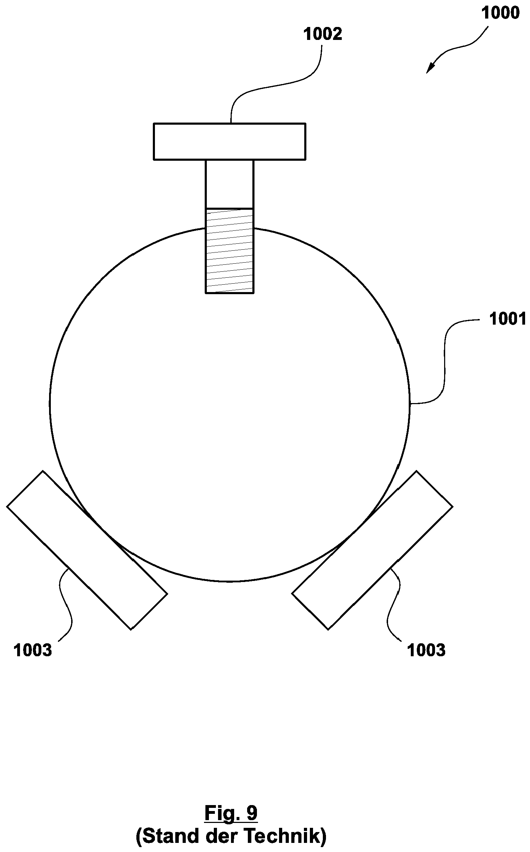

Figur 9 zeigt eine solche Anordnung 1000 nach dem Stand der Technik, indem eine Schraube 1002 eine Sonotrode 1001 gegen Gegenmassen 1003 drückt, um so die unerwünschten Bewegungen und Rotationen zu unterbinden.

Der allgemeine Wunsch nach energieeffizienteren elektrischen Geräten, wie zum Beispiel Kühlschränke, hat dazu geführt, dass mehr Isoliermaterial in solche Geräte eingebaut wird, wodurch weniger Platz in solchen Geräten für das Ultraschall-Verschweißen, beispielsweise von Metallröhrchen, verbleibt. Dies erfordert kleinere, handgeführte Ultraschall-Schweißeinrichtungen, insbesondere mit einer kompakteren und leichteren Anordnung der Sonotrode.

In der Praxis hat sich nun herausgestellt, dass es bei einer Miniaturisierung der Ultraschall-Schweißeinrichtungen und entsprechend klein dimensionierter Schraubverbindung für die Sonotrode es nicht möglich ist, eine ausreichende Vorspannkraft zwischen der Sonotrode und deren Halterung zu erzeugen, um eine verlässliche Halterung der Sonotrode und die Unterdrückung der unerwünschten Bewegungen und Rotationen der Sonotrode zu gewährleisten. Ferner führt die Verwendung von Schrauben und deren Gegenmassen dazu, dass der Miniaturisierung und Reduzierung des Gewichts der Ultraschall-Schweißeinrichtung Grenzen gesetzt sind, die es jedoch für diverse Anwendungen auf besonders kleinem Raum zu überwinden gilt. Darüber hinaus führt die Verwendung von Schrauben zur Befestigung der Sonotrode dazu, dass sich über Kopplungen zwischen Sonotrode und Schrauben einerseits und Sonotrode und Gegenmassen andererseits Verlustkanäle für die Schwingungen bilden und aufgrund dieser Kopplungen unerwünschte Wärme erzeugt wird.

### Kurzbeschreibung der Erfindung

Die vorliegende Erfindung betrifft daher die Aufgabe, Mittel zu finden, die ein verlässliches Ultraschall-Schweißen auch in kleineren Räumen erlaubt.

Diese Aufgabe wird gelöst durch ein Lager für eine Sonotrode einer Ultraschall-Schweißeinrichtung gemäß des unabhängigen Anspruch 1, durch ein Kit gemäß Anspruch 11, durch eine Sonotrode gemäß des unabhängigen Anspruchs 12, durch eine Ultraschall-Schweißeinrichtung gemäß Anspruch 13, durch ein Verfahren gemäß des unabhängigen Anspruchs 14 und durch eine Verwendung gemäß des unabhängigen Anspruchs 15. Einige der bevorzugten Ausführungsformen sind in den abhängigen Ansprüchen beschrieben.

Das erfindungsgemäße Lager für eine Sonotrode einer Ultraschall-Schweißeinrichtung umfasst: ein Rahmen, wobei der Rahmen eine Öffnung zur Aufnahme der Sonotrode zumindest teilweise abgrenzt; wobei der Rahmen im Bereich der Öffnung ausgelegt ist, die Sonotrode in der Öffnung zu lagern; wobei der Rahmen derart ausgelegt ist, dass, durch Einwirken einer Kraft von der Sonotrode auf einen ersten Abschnitt des Rahmens, sich der Rahmen derart verformt, dass dadurch ein zweiter Abschnitt das Rahmens in die Öffnung hinein bewegt wird, wobei der zweite Abschnitt von dem ersten Abschnitt verschieden ist.

Die erfindungsgemäße Sonotrode ist zur Verwendung mit, insbesondere zur Lagerung in, dem erfindungsgemäßen Lager oder Kit angepasst.

Dadurch, dass, statt einer Befestigung der Sonotrode mittels Schrauben und Gegenassen, ein Lager mit einem Rahmen zum Aufnehmen und Lagern der Sonotrode verwendet wird, können die oben genannten Nachteile einer Schraubverbindung, insbesondere die Verlustkanäle und Beschränkungen der Miniaturisierung und der Gewichtsreduktion, überwunden werden.

Dadurch, dass der Rahmen derart ausgelegt ist, dass, durch Einwirken einer Kraft von der Sonotrode auf einen ersten Abschnitt des Rahmens, sich der Rahmen derart verformt, dass dadurch ein zweiter, vom ersten Abschnitt verschiedener, Abschnitt des Rahmens in die Öffnung hinein bewegt wird, und dadurch die Sonotrode fixiert bzw. festgeklemmt, wird zudem ermöglicht, dass auch bei einer Miniaturisierung und Reduktion des Gewichts der Ultraschall-Schweißeinrichtung eine verlässliche Fixierung der Sonotrode ermöglicht wird. Diese verlässliche Fixierung der Sonotrode wird insbesondere dadurch erreicht, dass gerade bei Last während des Ultraschall-Schweißvorgangs und der dadurch auftretenden Kraft, die von der Sonotrode auf den ersten Abschnitt des Rahmens einwirkt, der Rahmen diese Last bei der Fixierung der Sonotrode berücksichtigt, indem sich der zweite Abschnitt des Rahmens in der Öffnung hinein bewegt und somit die Öffnung verkleinert und die Sonotrode fixiert bzw. festgeklemmt. Bei dieser Bewegung des zweiten Abschnitts in die Öffnung hinein kann sich der zweite Abschnitt auf den ersten Abschnitt zu bewegen.

Mit anderen Worten ermöglicht das erfindungsgemäße Sonotrodenlager einen selbstregulierenden Befestigungsmechanismus, bei dem gerade dann, wenn eine (stärkere) Fixierung der Sonotrode nötigt ist, nämlich bei einer Last im Ultraschall-Schweißvorgang, der Rahmen des Sonotrodenlagers sich der Rahmen durch Bewegung des zweiten Abschnitts in die Öffnung hinein zusammenzieht und die Sonotrode (stärker) fixiert bzw. festklemmt.

Der Rahmen kann dabei aufgrund eines internen Hebelmechanismus umso stärker darauf reagieren, je größer die Last ist, indem durch eine, bei der stärkeren Last größeren, von der Sonotrode auf den ersten Abschnitt einwirkenden Kraft der zweite Abschnitt des Rahmens durch stärkere Verformung des Rahmens weiter in die Öffnung hinein bewegt wird und somit stärker die Sonotrode fixiert bzw. festklemmt. Dadurch, dass sich der zweite Abschnitt weiter in die Öffnung hinein bewegt, wird die Öffnung stärker verkleinert. Diese stärkere Reaktion des Rahmens des Sonotrodenlagers entsteht dadurch, dass bei einer größeren von der Sonotrode auf den ersten Abschnitt des Rahmens einwirkenden Kraft während des Ultraschall-Schweißvorgangs sich der Rahmen stärker verformt und aufgrund des Hebelmechanismus im Rahmen der zweiten Abschnitt dadurch stärker in die Öffnung hinein bewegt wird.

Das erfindungsgemäße Sonotrodenlager erlaubt zudem eine stärkere Miniaturisierung der Ultraschall-Schweißeinrichtung und eine stärkere Gewichtsreduktion solcher Einrichtungen bis unter 8 kg, sogar bis unter 6 kg oder 5 kg. Mit den konventionellen schraubenbasierten Systemen aus dem Stand der Technik sind üblicherweise Gewichte unter 8 kg nicht realisiert worden.

Des Weiteren kann durch das erfindungsgemäße Sonotrodenlager das Einstellen des Schneidspaltes zwischen Sonotrode und Amboss in horizontaler Richtung entfallen, was gerade bei den schraubenbasierten Systemen aus dem Stand der Technik aufwendig sein konnte.

Desweiteren ist durch das erfindungsgemäße Sonotrodenlager das Auswechseln einer abgenutzten Sonotrode einfacher möglich, und insbesondere bei geringer Umrüstzeit realisierbar, im Vergleich zu den schraubenbasierten Systemen aus dem Stand der Technik. Ferner kann eine mittels Schrauben befestigte Sonotrode aus dem Stand der Technik auch einfach durch das erfindungsgemäße Lager oder das erfindungsgemäße Kit nachgerüstet werden.

Die oben beschriebene Fixierung der Sonotrode durch die Bewegung des zweiten Abschnitts in die Öffnung hinein erlaubt die Begrenzung oder Unterbindung der Bewegung der Sonotrode in vertikaler und/oder horizontaler Richtung, sowie die Begrenzung oder Unterbindung einer Rotation der Sonotrode um deren Längsachse im Uhrzeigersinn und/oder gegen den Uhrzeigersinn.

Eine besonders effektive Begrenzung einer solchen Bewegung der Sonotrode in vertikaler und/oder horizontaler Richtung sowie eine besonders effektive Begrenzung einer solchen Rotation der Sonotrode ergibt sich durch bevorzugte Ausführungsformen des Sonotrodenlagers wonach der erste Abschnitt des Rahmens zu Öffnung hin ein, zwei oder mehr Vorsprünge zur Lagerung der Sonotrode in der Öffnung aufweist. Auch der zweite Abschnitt des Rahmens kann ein, zwei oder mehr Vorsprünge zur Lagerung der Sonotrode in der Öffnung aufweisen. Diese Vorsprünge können Punkt- oder Linienkontakte an der Grenzfläche der Vorsprünge zur Sonotrode zur Lagerung der Sonotrode aufweisen, wodurch darüber hinaus noch ein weiterer Vorteil dieser Vorsprünge realisiert wird, nämlich eine Reduktion der Verluste durch weniger Kopplung zwischen Sonotrode und Rahmen. Punkt-oder Linienkontakte führen gegenüber den aus dem Stand der Technik bekannten flächenartigen Kontakten zwischen Befestigung und Sonotrode zu geringeren Kopplungen und dadurch zu weniger Verlustkanälen. Dadurch wird auch weniger Verlustwärme generiert.

Ein oder mehrere oder jeder der Vorsprünge des ersten und/oder zweiten Abschnitts kann dabei eine Auflagerfläche zur Lagerung der Sonotrode in der Öffnung aufweisen, wobei vorzugsweise der Punkt- oder Linienkontakt mit der Sonotrode an der Grenzfläche zwischen der Auflagerfläche und der Oberfläche der Sonotrode vorliegt. Die Auflagerfläche jedes oder eines Teils der Vorsprünge kann die Form eines Abschnitts einer Kugeloberfläche oder die Form eines Abschnitts einer Quaderoberfläche haben, was besonders vorteilhaft hinsichtlich der Minimierung der Kopplungen mit der Sonotrode ist. Wenn die Auflagerfläche die Form eines Abschnitts einer Kugeloberfläche hat, erlaubt dies, dass eine besonders vorteilhafte Aufnahme von Kräften besteht, dass sich besonders wenig Verformungen an Auflagerfläche und/oder Gegenfläche ergeben und, dass eine besonders vorteilhafte Flexibilität bei der relativen Anordnung von der Gegenfläche gegenüber der Auflagerfläche besteht.

Die ein, zwei oder mehr Vorsprünge im Bereich des zweiten Abschnitts zur Lagerung der Sonotrode in der Öffnung können bei Verformung des Rahmens aufgrund der Kraft der Sonotrode auf den ersten Abschnitt, das Bewegen des zweiten Abschnitts in die Öffnung hinein vereinfachen und erlauben, dass sich der zweite Abschnitt weiter in die Öffnung bewegen lässt und somit eine noch stärkere Fixierung bzw. Klemmwirkung im Bezug auf die Sonotrode entsteht. Des weiteren können auch durch diese Vorsprünge im Bereich des zweiten Abschnitts mit Punkt- oder Linienkontakten mit der Sonotrode Verlustkanäle vermieden werden.

Gemäß bevorzugter Ausführungsformen kann der Rahmen des erfindungsgemäßen Lagers im ersten Abschnitt einen Querbalken umfassen und im zweiten Abschnitt ein oder zwei Schenkel umfassen. Jeder der Schenkel ist an einem anderen Ende des Querbalkens angebracht. Eine solche Ausgestaltung des Rahmens mit Querbalken und Schenkeln erlaubt auf besonders effektive Art und Weise die Verformung des Rahmens bei einwirkende Kraft von der Sonotrode auf den ersten Abschnitt und das Bewegen des zweiten Abschnitts in die Öffnung hinein durch ein Verschwenken der Schenkel gegenüber des Querbalkens in die Öffnung hinein. Durch die Bewegung des zweiten Abschnitts, beispielsweise durch das Verschwenken des Schenkels, in die Öffnung hinein wird die Öffnung verkleinert und die Sonotrode fixiert bzw. festgeklemmt. Die Verwendung der Schenkel und des Querbalkens erlaubt dabei eine Bewegung des zweiten Abschnitts weiter in die Öffnung hinein und damit eine größere Fixierung der Sonotrode bei Last.

Ein Ende jedes Schenkels kann bevorzugt an einem anderen Ende des Querbalkens angebracht sein. Der Rahmen kann bevorzugt in einem Bereich gegenüber des ersten Abschnitts offen sein und im Bereich des ersten und des zweiten Abschnitts jeweils geschlossen sein. Der Rahmen kann im an der Ultraschall-Schweißeinrichtung montierten Zustand bevorzugt die Form eines umgekehrten U haben, wobei der Querbalken horizontal am geschlossenen Ende des U angeordnet ist und jeder der Schenkel des Rahmens jeweils an einem anderen der vertikalen Bereiche des U angeordnet sind. Im Ruhezustand des Rahmens, kann sich der erste Abschnitt des Rahmens senkrecht zum zweiten Abschnitt des Rahmens erstrecken und/oder oder jeder der Schenkel kann sich senkrecht zu dem Querbalken erstrecken. Im aktivierten Zustand des Rahmens, also wenn von der Sonotrode eine Kraft auf den ersten Abschnitt des Rahmens einwirkt und sich der Rahmen verformt, wird durch die Bewegung des zweiten Abschnitts in die Öffnung hinein der Winkel zwischen dem ersten Abschnitt und dem zweiten Abschnitt, insbesondere zwischen ein oder jedem der Schenkel und dem Querbalken, verkleinert zu einem Winkel von kleiner 90° und größer 0°, bevorzugt zu einem Winkel im Bereich 89°-87°, oder zu einem Winkel von 88°. Ein oder jeder der Schenkel II wird also um 1-3°, vorzugsweise um 2°, in die Öffnung 4 hinein und in Richtung des Querbalkens I verschwenkt. Insbesondere dadurch wird die Sonotrode besonders effektiv auch im Fall einer Last und ohne Verwendung von Schrauben an der Sonotrode fixiert.

Gemäß bevorzugter Ausführungsformen weist der Rahmen ferner eine Stützfläche zur Anbringung des Lagers an einem Gehäuse der Ultraschall-Schweißeinrichtung auf, wobei die Stützfläche eine schiefe Ebene aufweist, die ausgelegt ist, durch die einwirkende Kraft von der Sonotrode auf den ersten Abschnitt des Rahmens in Richtung der Längsachse der Sonotrode vom Kopf der Sonotrode weg entlang einer schiefen Ebene des Gehäuses zu gleiten. Auch diese Stützfläche erlaubt wiederum einen zusätzlichen selbstregulierenden Mechanismus wonach gerade bei stärkerer von der Sonotrode auf den ersten Abschnitt einwirkenden Kraft während des Ultraschall-Schweißvorgangs die Stützfläche aufgrund der schiefen Ebene stärker zurück entlang der schiefen Ebene des Gehäuses gleiten kann und somit ein Abfallen des Rahmens von der Ultraschall-Schweißeinrichtung, gerade bei starker Last, verhindert wird. Je stärker die Last und somit die Kraft ist, umso stärker wird der Rahmen aufgrund der schiefen Ebene der Stützfläche am Gehäuse von dem Bereich in dem der Schweißvorgangs stattfindet bzw. vom Kopf der Sonotrode weggezogen. Somit kann das Lager ohne Befestigungsmittel, wie beispielsweise Schrauben, an der Ultraschall-Schweißeinrichtung befestigt werden, wodurch auch an dieser Stelle Verlustkanäle verhindert werden und eine weitere Miniaturisierung und Gewichtsreduktion der Ultraschall-Schweißeinrichtung ermöglicht wird, ohne jedoch die Stabilität der Fixierung der Sonotrode und damit die Verlässlichkeit des Schweißprozesses zu gefährden.

Sofern diese Kurzbeschreibung der Erfindung Merkmale beschreibt, die nicht in den Patentansprüchen aufgeführt sind, so stellen diese Merkmale keine wesentlichen Merkmale in dem Sinne dar, dass diese Merkmale zwangsläufig zur Beschreibung der Erfindung in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### Kurzbeschreibung der Zeichnungen

Figur 1 zeigt eine erfindungsgemäße Ultraschall-Schweißeinrichtung umfassend einen Amboss, einen Ambossträger, sowie eine Sonotrode. Die Figur gibt auch die Haupt-Schwingungsrichtung der Sonotrode an.
Figur 2 zeigt eine dreidimensionale Darstellung des erfindungsgemäßen Kits samt erfindungsgemäße Lager und eine erfindungsgemäße Sonotrode zur Verwendung mit dem Kit.
Figur 3 zeigt eine Seitenansicht auf die Anordnung gemäß Figur 2.
Figur 4 zeigt einen Schnitt durch das erfindungsgemäße Lager gemäß des Schnitts A-A in Figur 3.
Figur 5 zeigt mögliche Varianten der Vorsprünge des Rahmens des erfindungsgemäßen Lagers.
Figur 6 zeigt eine nähere Frontansicht auf das erfindungsgemäße Lager im Ruhezustand
Figur 7 zeigt eine nähere Ansicht auf das erfindungsgemäße Lager im aktiven Zustand.
Figur 8 zeigt das erfindungsgemäße Lager, welches mittels einer Stützfläche an einem Gehäuse einer Ultraschall-Schweißeinrichtung befestigt ist. Die hier gezeigten vier Löcher im Rahmen für Schrauben sind optional.
Figur 9 zeigt eine konventionelle Anordnung zur Fixierung der Sonotrode gemäß des Stands der Technik.

Bauteile, die in mehreren Figuren dargestellt sind, tragen dieselben Referenzzeichen.

### Detaillierte Beschreibung

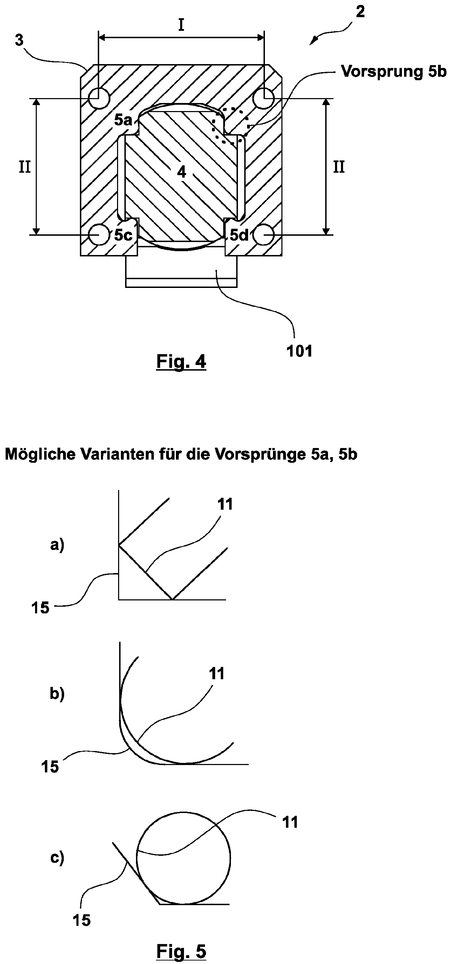

Erfindungsgemäß wird vorgeschlagen, ein Lager 2 für eine Sonotrode 101 einer Ultraschall-Schweißeinrichtung 100 bereitzustellen, wie beispielhaft in Figur 4 gezeigt.

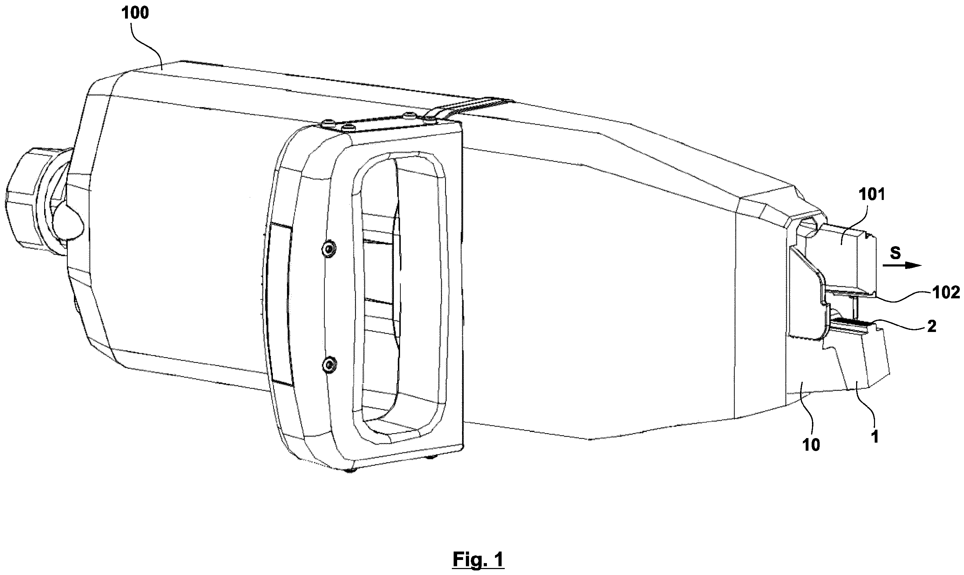

Zunächst wenden wir uns aber Figur 1 zu. Diese zeigt eine erfindungsgemäße Ultraschall-Schweißeinrichtung 100 umfassend einen Amboss 1 und einen Ambossträger 10, sowie eine erfindungsgemäße Sonotrode 101. Die Figur gibt auch die Haupt-Schwingungsrichtung S entlang der Längsachse der Sonotrode und die mit der Arbeitsfläche 2 des Amboss 1 zusammenwirkende Gegenfläche 102 der Sonotrode 101 an. Zwischen der Arbeitsfläche 2 und der Gegenfläche 102 befindet sich der Schweißraum im dem das zu verschweißende Objekt eingebracht wird und der Schweißvorgang stattfindet.

Die Arbeitsfläche 2 kann während des Ultraschall-Schweißens durch die Ultraschall-Schweißeinrichtung 100 eine zur Sonotrode 101, insbesondere zur Gegenfläche 102, der Ultraschall-Schweißeinrichtung 100 ausgerichtete Oberfläche des Amboss 1 sein.

Die Ultraschall-Schweißeinrichtung hat einen Griff mit dem diese durch den Benutzer zu dem Raum gesteuert werden kann, indem das zu verschweißende Objekt, zum Beispiel Metallröhrchen, mittels Ultraschall-Schweißen zu verschweißen ist. Das zu verschweißende Objekt wird zwischen Arbeitsfläche 2 und Gegenfläche 102 gelegt und der Amboss 1 wird gegen die Sonotrode 101 geführt und an sie gedrückt während das Objekt mittels Longitudinalschwingung der Sonotrode 101 in Haupt-Schwingungsrichtung S der Sonotrode verschweißt wird. Durch ein solches Ultraschall-Schweißen können Röhrchen fluiddicht verschweißt werden.

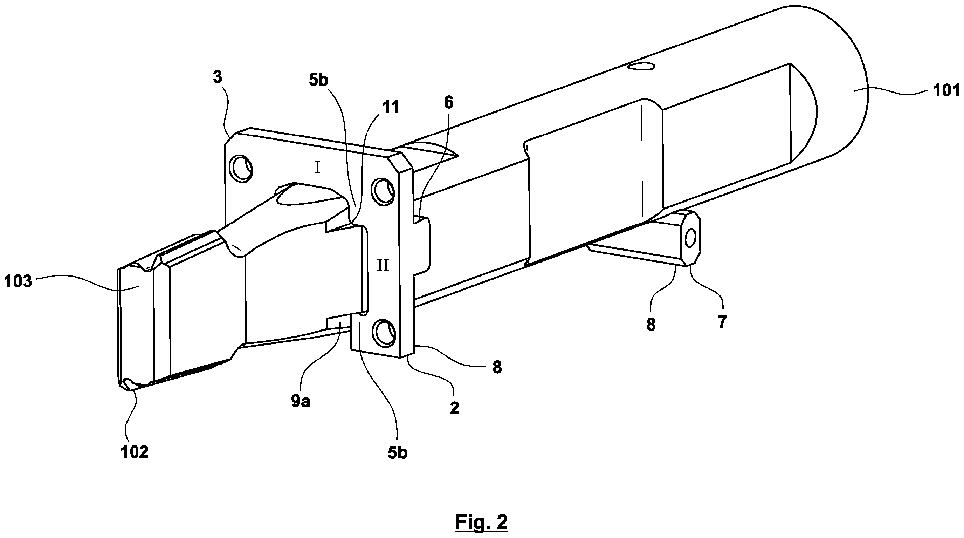

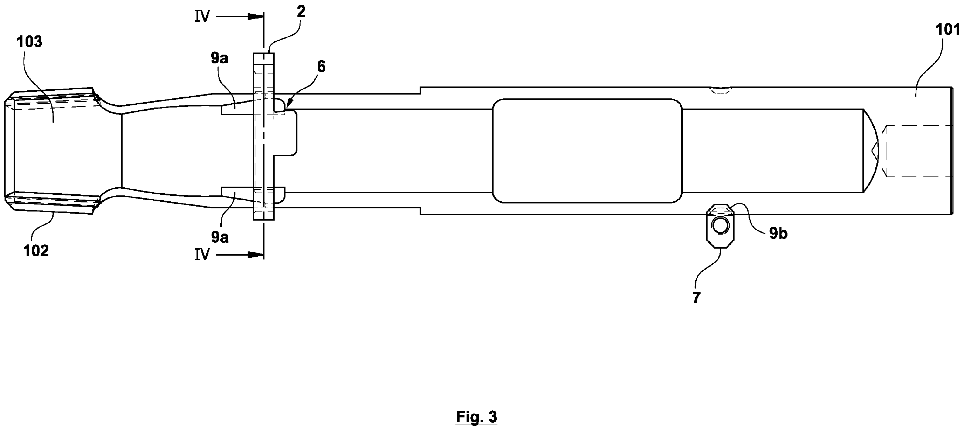

Figur 2 zeigt eine dreidimensionale Darstellung des erfindungsgemäßen Kits 8 samt erfindungsgemäßem Lager 2 und Begrenzungsmittel 7, sowie eine erfindungsgemäße Sonotrode 101 zur Verwendung mit dem Kit 8. Figur 3 zeigt eine Seitenansicht auf die Anordnung gemäß Figur 2. Figur 4 zeigt einen Schnitt durch das erfindungsgemäße Lager 2 gemäß des Schnitts A-A in Figur 3.

Das Begrenzungsmittel 7, z.B. ein Stift, dient der Begrenzung jeder Bewegung der Sonotrode 101 in Richtung der Längsachse der Sonotrode 101, also in Richtung des Schweißbereichs bzw. Ambosses oder davon weg. Das Begrenzungsmittel ist dabei jedoch optional und die Sonotrode 101 kann auch nur mit dem erfindungsgemäßen Lager 2 verwendet werden. Wie in Figur 2 gezeigt, kann die Sonotrode 101 ein oder mehrere Aussparungen 9a, beispielsweise Kerben, aufweisen, in die die Vorsprünge 5b, Ziffer 5d des Rahmens 3 des Lagers 2 zur Lagerung der Sonotrode 101 eingreifen können. Die Form der Aussparungen 9a ist dabei vorzugsweise komplementär zu der Form der Vorsprünge 5b, 5d.

Des weiteren kann die Sonotrode 101 bei Verwendung des optionalen Begrenzungsmittels 7 eine Aussparung zu 9b, beispielsweise eine Kerbe, aufweisen, die sich senkrecht zur Längsachse der Sonotrode erstreckt und ausgelegt ist, das Begrenzungsmittel 7 derart aufzunehmen, dass die Sonotrode 101 nicht mehr oder im Wesentlichen nicht mehr entlang deren Längsachse bewegbar ist. Longitudinalschwingung der Sonotrode 101 sind auch bei Verwendung des Begrenzungsmittels 7 möglich.

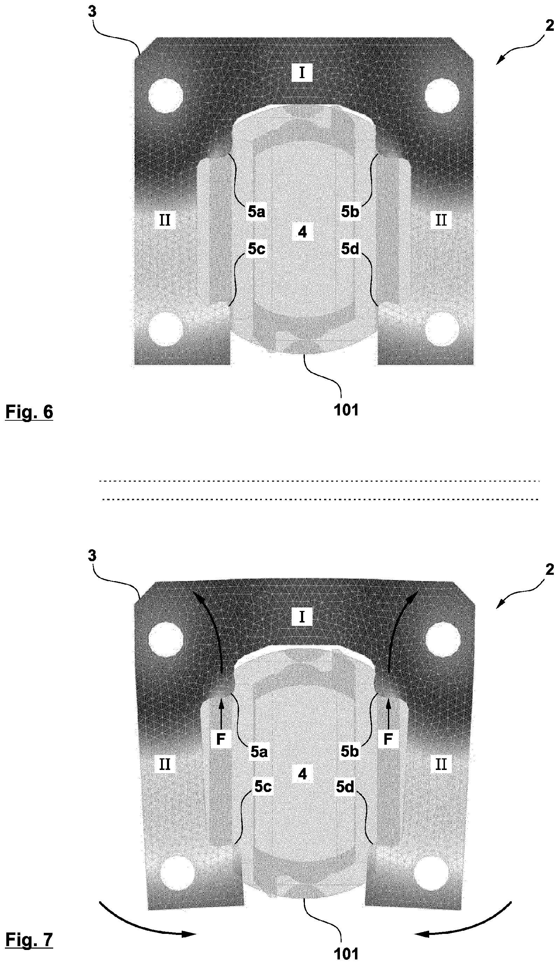

Das schon erwähnte erfindungsgemäße Sonotrodenlager 2, wie beispielsweise in Figur 4 gezeigt, umfasst dabei ein Rahmen, wobei der Rahmen 3 eine Öffnung 4 zur Aufnahme der Sonotrode 101 zumindest teilweise abgrenzt; wobei der Rahmen 3 im Bereich der Öffnung 4 ausgelegt ist, die Sonotrode 101 in der Öffnung 4 zu lagern; und wobei der Rahmen 3 derart ausgelegt ist, dass, durch Einwirken einer Kraft F (siehe Figur 7) von der Sonotrode 101 auf einen ersten Abschnitt I des Rahmens 3, sich der Rahmen 3 derart verformt, dass dadurch ein zweiter Abschnitt II des Rahmens 3 in die Öffnung 4 hinein bewegt wird, wobei der zweite Abschnitt II von dem ersten Abschnitt I verschieden ist. Diese Bewegung des zweiten Abschnitts II ist beispielhaft in der Abfolge der Figuren 6 und 7 gezeigt.

Der erste Abschnitt I und der zweite Abschnitt II des Rahmens 3 können ausgelegt sein, die Sonotrode 101 in der Öffnung 4 zu lagern. Der erste Abschnitt I des Rahmens 3 kann zur Öffnung 4 hin ein, zwei oder mehr Vorsprünge 5a, 5b zur Lagerung der Sonotrode 101 in der Öffnung 4 aufweisen. Die Kraft F kann auf die Vorsprünge 5a, 5b einwirken, die am ersten Abschnitt I des Rahmens 3 angeordnet sind, wie in Figur 7 gezeigt.

Der zweite Abschnitt II des Rahmens 3 kann zur Öffnung 4 hin ein, zwei oder mehr Vorsprünge 5c, 5d zur Lagerung der Sonotrode 101 in der Öffnung 4 aufweisen, wobei die Vorsprünge 5c, 5d des zweiten Abschnitts II durch die Verformung des Rahmens 3 in die Öffnung 4 hinein bewegt werden, wie in Figur 7 gezeigt.

Jeder der Vorsprünge 5a, 5b, 5c, 5d, oder die Vorsprünge 5a, 5b, 5c, 5d insgesamt, des ersten und/oder zweiten Abschnitts II können ausgelegt sein, eine Bewegung der Sonotrode 101 in vertikaler Richtung und/oder horizontaler Richtung zu begrenzen und/oder eine Rotation der Sonotrode 101 um ihre Längsachse im Uhrzeigersinn und/oder gegen den Uhrzeigersinn zu begrenzen.

Ein Teil der Vorsprünge 5a, 5b, 5c, 5d des ersten und/oder zweiten Abschnitts I, II können derart geformt sein, dass jeder Vorsprung 5a, 5b, 5c, 5d des Teils der Vorsprünge ausgelegt ist, die Sonotrode 101 mittels ein, zwei oder mehr Linienkontakten mit der Sonotrode 101 zur Begrenzung der Bewegung der Sonotrode 101 in vertikaler und/oder horizontaler Richtung zu lagern.

Ein oder mehrere oder jeder der Vorsprünge 5a, 5b, 5c, 5d des ersten und/oder zweiten Abschnitts I, II kann eine Auflagerfläche 11, wie in den Figuren 2 und 5 gezeigt, zur Lagerung der Sonotrode 101 in der Öffnung 4 aufweisen, wobei ein Punkt-oder Linienkontakt des Vorsprungs 5a, 5b, 5c, 5d mit der Sonotrode 101 an der Grenzfläche zwischen der Auflagerfläche 11 und der Oberfläche der Sonotrode 101 vorliegt. Jeder der Vorsprünge 5a, 5b des ersten Abschnitts I kann derart geformt sein, dass der Vorsprung 5a, 5b ausgelegt ist, die Sonotrode 101 mittels mindestens zwei Punkt- oder Linienkontakten mit der Sonotrode 101 zu lagern. Beispielhafte Formen für die Vorsprünge 5a, 5b, 5c, 5d sind dabei anhand der Figuren 2, 4, 5, 6 und 7 gezeigt. Figur 5 zeigt dabei mögliche Varianten zu den Formen der Vorsprünge 5a, 5b, 5c, 5d, die in den Figuren 2, 4, 6 und 7 gezeigt sind, anhand des Vorsprungs 5b. Wie in Figur 5 b) und c) gezeigt kann die Auflagerfläche 11 des Vorsprungs die Form eines Abschnitts einer Kugeloberfläche sein, was erlaubt, dass mehr Kraft aufgenommen werden kann, sich weniger Verformungen ergeben und eine geringe Präzision bei der relativen Anordnung von der Gegenfläche 15 gegenüber der Auflagerfläche 11 nötig ist, als im Vergleich zur Variante 5 a). Wie in Figur 5 a) gezeigt kann die Auflagerfläche 11 alternativ die Form eines Abschnitts einer Quaderoberfläche haben. Figur 5 zeigt auch verschieden geformte Gegenflächen 15 der Sonotrode 101 zur Auflagerfläche 11 wobei die verschiedene Gegenflächen 15 eckig (Fig. 5a), c)) oder abgerundet (Fig. 5b)) sein können und einen Winkel von 90° (Fig. 5a), b)) oder mehr ((Fig. 5c)) oder weniger einschließen können und zwar derart, dass sich die Vorsprünge 5a, 5b, 5c, 5d mit deren Auflagerfläche 11 in dem Bereich des Winkels befinden. Diese Gegenfläche 15 der Sonotrode ist eine Oberfläche der Aussparung 9a der Sonotrode 101.

Die mindestens zwei Punkt- oder Linienkontakte der Vorsprünge 5a, 5b gemäß der Figuren 2, 4, 5, 6 und 7 können Rotationen der Sonotrode 101 um ihre Längsachse im Uhrzeigersinn und gegen den Uhrzeigersinn begrenzen und einer der mindestens zwei Linienkontakte die Bewegung der Sonotrode 101 in vertikaler Richtung begrenzt und der andere der mindestens zwei Linienkontakte die Bewegung der Sonotrode 101 in horizontaler Richtung begrenzt.

Der erste Abschnitt I des Rahmens 3 kann einen Querbalken des Rahmens 3 umfassen und der zweite Abschnitt II des Rahmens 3 kann zwei Schenkel des Rahmens 3 umfassen. Jeder der Schenkel II kann bei Einwirken der Kraft F von der Sonotrode 101 auf den Querbalken I, und durch die sich dadurch ergebende Verformung des Rahmens 3, in die Öffnung 4 hinein verschwenkt werden, wie in Figuren 6 und 7 gezeigt.

Figur 6 zeigt eine nähere Frontansicht auf das erfindungsgemäße Lager im Ruhezustand, also in einem Zustand in dem die Sonotrode keine Kraft auf den ersten Abschnitt des Rahmens einwirkt. Figur 7 zeigt eine nähere Ansicht auf das erfindungsgemäße Lager im aktiven Zustand, also in einem Zustand in dem die Sonotrode aufgrund der Last während des Ultraschall-Schweißvorgangs eine Kraft F auf den ersten Abschnitt des Rahmens einwirkt (siehe Pfeil), der Rahmen sich dadurch verformt (siehe Pfeil), und der zweite Abschnitt II, beispielsweise die Schenkel, in die Öffnung 4 hinein bewegt wird (siehe Pfeile).

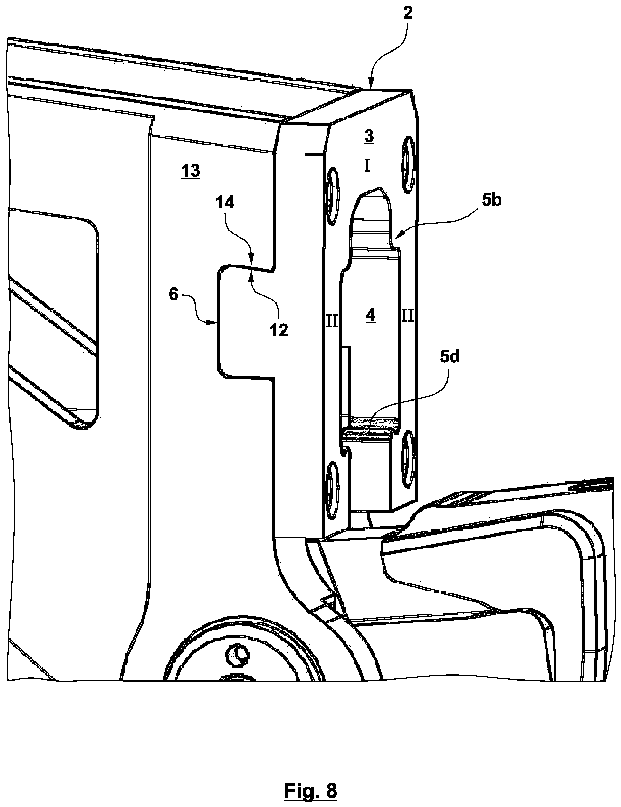

Der Rahmen kann, wie in den Figuren 2, 4, 6, 7 und 8 gezeigt, in einem Bereich gegenüber des ersten Abschnitts I offen sein und im Bereich des ersten und des zweiten Abschnitts I, II jeweils geschlossen sein. Der Rahmen kann im an der Ultraschall-Schweißeinrichtung 100 montierten Zustand bevorzugt die Form eines umgekehrten U haben, wie in Figur 8 gezeigt, wobei der Querbalken I horizontal am geschlossenen Ende des U angeordnet ist und jeder der Schenkel II des Rahmens 3 jeweils an einem anderen der vertikalen Bereiche des U angeordnet sind. Im Ruhezustand des Rahmens 3, wie in Figur 6 gezeigt, kann sich der erste Abschnitt I des Rahmens 3 senkrecht zum zweiten Abschnitt II des Rahmens 3 erstrecken und/oder oder jeder der Schenkel II kann sich senkrecht zu dem Querbalken I erstrecken. Im aktivierten Zustand des Rahmens, wie in Figur 7 gezeigt, also wenn von der Sonotrode eine Kraft F auf den ersten Abschnitt I des Rahmens 3 einwirkt und sich der Rahmen 3 verformt, wird durch die Bewegung des zweiten Abschnitts II in die Öffnung hinein der Winkel zwischen dem ersten Abschnitt I und dem zweiten Abschnitt II, insbesondere zwischen ein oder jedem der Schenkel II und dem Querbalken I, verkleinert zu einem Winkel von kleiner 90° und größer 0°, bevorzugt zu einem Winkel im Bereich 87°-89°, oder zu einem Winkel von 88°. Ein oder jeder der Schenkel II wird also um 1-3°, vorzugsweise um 2°, in die Öffnung 4 hinein und in Richtung des Querbalkens I verschwenkt. Insbesondere dadurch wird die Sonotrode besonders effektiv auch im Fall einer Last und ohne Verwendung von Schrauben an der Sonotrode fixiert.

Wie in Figur 2 angedeutet und in Figur 8 näher gezeigt, kann der Rahmen 3 ferner eine Stützfläche 6 zur Anbringung des Lagers 2 an einem Gehäuse (13) der Ultraschall-Schweißeinrichtung 100 aufweisen, wobei die Stützfläche 6 eine schiefe Ebene 12 aufweist, die ausgelegt ist, durch das Einwirken der Kraft F von der Sonotrode 101 auf den ersten Abschnitt I des Rahmens 3 in Richtung der Längsachse der Sonotrode 101 vom Kopf 103 der Sonotrode 101 weg entlang einer schiefen Ebene (14) des Gehäuses (13) zu gleiten. Dadurch kann im Falle einer Last auf die Sonotrode der Rahmen und damit das Lager für die Sonotrode am Gehäuse (13) der Ultraschall-Schweißeinrichtung noch fester gehalten werden, als wenn diese Last nicht anliegen würde.

Das erfindungsgemäße Lager 2 benötigt bei Verwendung der Stützfläche 6 mit schiefe Ebene 12 keinerlei zusätzliche Befestigungsmittel, insbesondere keinerlei Schrauben, um an dem Gehäuse 13 der Ultraschall-Schweißeinrichtung 100 befestigt werden. Falls man zusätzliche Befestigungsmittel zu Sicherheit verwenden möchte, reichen ein oder mehrere Befestigungsmittel im ersten Abschnitt I des Rahmens 3 aus. Möchte man weitere Befestigungsmittel, beispielsweise im zweiten Abschnitt II des Rahmens 3, verwenden, so ist es möglich, hier Befestigungsmittel mit Spiel, beispielsweise kleine Schrauben, derart zu verwenden, dass die Bewegung des zweiten Abschnitts II in die Öffnung 4 hinein in Reaktion auf ein Verformen des Rahmens 3 aufgrund der von der Sonotrode 101 auf den ersten Abschnitt I einwirkenden Kraft F nicht oder nicht wesentlich für die Fixierung der Sonotrode 101 und die Realisierung der hier beschriebenen Vorteile beeinträchtigt wird. In jedem der hier beschriebenen erfindungsgemäßen Lager 2 sind die vier Löcher im Rahmen 3 für Schrauben optional.

Erfindungsgemäß wird ebenfalls ein Verfahren zum Nachrüsten der Sonotrode 101 der Ultraschall-Schweißeinrichtung 100 beschrieben, das Verfahren umfassend: Entfernen von ein oder mehreren Befestigungsmitteln 1002, insbesondere Schrauben, von der Sonotrode 101 wobei die Befestigungsmittel 1002 ausgelegt sind, eine Bewegung der Sonotrode 101 in vertikaler Richtung und/oder horizontaler Richtung zu begrenzen und/oder eine Rotation der Sonotrode 101 um ihre Längsachse im Uhrzeigersinn und/oder gegen den Uhrzeigersinn zu begrenzen; Anbringen eines beliebigen des hier beschriebenen erfindungsgemäßen Lagers 2 oder erfindungsgemäßen Kits 8 an einem Gehäuse der Ultraschall-Schweißeinrichtung 100 derart, dass die Sonotrode 101 durch die Öffnung 4 des Lagers 2 hindurchgeführt wird und von dem Rahmen 3 des Lagers 2, beispielsweise durch Eingreifen der Vorsprünge 5a bis 5d in die Aussparung 9a, gelagert wird, wobei vorzugsweise das Begrenzungsmittel 7 an der Sonotrode 101, beispielsweise mittels Anbringung in der Aussparung 9b, angebracht wird.

Wie beschrieben, kann das erfindungsgemäße Lager 2 oder das erfindungsgemäße Kit 8 zum sehr vorteilhaften Lagern der Sonotrode 101 der Ultraschall-Schweißeinrichtung 100 verwendet werden und zwei derart, dass die oben mit dem Stand der Technik verbundenen Nachteile überwunden werden.

In der Beschreibung und in den Figuren sind bevorzugte Ausführungsformen der durch die folgenden Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

## Patentansprüche

1. Ein Lager (2) für eine Sonotrode (101) einer Ultraschall-Schweißeinrichtung (100), das Lager (2) umfassend:
ein Rahmen, wobei der Rahmen (3) eine Öffnung (4) zur Aufnahme der Sonotrode (101) zumindest teilweise abgrenzt;
wobei der Rahmen (3) im Bereich der Öffnung (4) ausgelegt ist, die Sonotrode (101) in der Öffnung (4) zu lagern;
wobei der Rahmen (3) derart ausgelegt ist, dass, durch Einwirken einer Kraft (F) von der Sonotrode (101) auf einen ersten Abschnitt (I) des Rahmens (3), sich der Rahmen (3) derart verformt, dass dadurch ein zweiter Abschnitt (II) des Rahmens (3) in die Öffnung (4) hinein bewegt wird, wobei der zweite Abschnitt (II) von dem ersten Abschnitt (I) verschieden ist.

2. Das Lager (2) nach Anspruch 1, wobei der erste Abschnitt (I) und der zweite Abschnitt (II) des Rahmens (3) ausgelegt sind, die Sonotrode (101) in der Öffnung (4) zu lagern.

3. Das Lager (2) nach Anspruch 1 oder 2, wobei der erste Abschnitt (I) des Rahmens (3) zur Öffnung (4) hin ein, zwei oder mehr Vorsprünge (5a, 5b) zur Lagerung der Sonotrode (101) in der Öffnung (4) aufweist, wobei vorzugsweise die Kraft (F) von der Sonotrode (101) auf die Vorsprünge (5a, 5b) einwirkt, die am ersten Abschnitt (I) des Rahmens (3) angeordnet sind.

4. Das Lager (2) nach irgendeinem der vorangehenden Ansprüche, wobei der zweite Abschnitt (II) des Rahmens (3) zur Öffnung (4) hin ein, zwei oder mehr Vorsprünge (5c, 5d) zur Lagerung der Sonotrode (101) in der Öffnung (4) aufweist, wobei die Vorsprünge (5c, 5d) des zweiten Abschnitts (II) durch die Verformung des Rahmens (3) in die Öffnung (4) hinein bewegt werden.

5. Das Lager (2) nach irgendeinem der Ansprüche 2-4, wobei jeder der Vorsprünge (5a, 5b, 5c, 5d), oder die Vorsprünge (5a, 5b, 5c, 5d) insgesamt, des ersten und/oder zweiten Abschnitts (II) ausgelegt sind, eine Bewegung der Sonotrode (101) in vertikaler Richtung und/oder horizontaler Richtung zu begrenzen und/oder eine Rotation der Sonotrode (101) um ihre Längsachse im Uhrzeigersinn und/oder gegen den Uhrzeigersinn zu begrenzen.

6. Das Lager (2) nach irgendeinem der Ansprüche 2-5, wobei ein Teil der Vorsprünge (5a, 5b, 5c, 5d) des ersten und/oder zweiten Abschnitts (I, II) derart geformt ist, dass jeder Vorsprung (5a, 5b, 5c, 5d) des Teils der Vorsprünge ausgelegt ist, die Sonotrode (101) mittels ein, zwei oder mehr Linienkontakten mit der Sonotrode (101) zur Begrenzung der Bewegung der Sonotrode (101) in vertikaler und/oder horizontaler Richtung zu lagern.

7. Das Lager (2) nach irgendeinem der Ansprüche 2-6, wobei jeder der Vorsprünge (5a, 5b) des ersten Abschnitts (I) derart geformt ist, dass der Vorsprung (5a, 5b) ausgelegt ist, die Sonotrode (101) mittels mindestens zwei Linienkontakten mit der Sonotrode (101) zu lagern, wobei vorzugsweise mindestens zwei Linienkontakte Rotationen der Sonotrode (101) um ihre Längsachse im Uhrzeigersinn und gegen den Uhrzeigersinn begrenzen und einer der mindestens zwei Linienkontakte die Bewegung der Sonotrode (101) in vertikaler Richtung begrenzt und der andere der mindestens zwei Linienkontakte die Bewegung der Sonotrode (101) in horizontaler Richtung begrenzt.

8. Das Lager (2) nach irgendeinem der vorangehenden Ansprüche, wobei der erste Abschnitt (I) des Rahmens (3) einen Querbalken des Rahmens (3) umfasst und der zweite Abschnitt (II) des Rahmens (3) zwei Schenkel des Rahmens (3) umfasst, wobei jeder der zwei Schenkel (II) an einem anderen Ende des Querbalkens (I) angebracht ist, wobei vorzugsweise jeder der Schenkel (II) bei Einwirken der Kraft (F) von der Sonotrode (101) auf den Querbalken (I), und durch die sich dadurch ergebende Verformung des Rahmens (3), in die Öffnung (4) hinein verschwenkt wird.

9. Das Lager (2) nach irgendeinem der vorangehenden Ansprüche, wobei der Rahmen (3) ferner eine Stützfläche (6) zur Anbringung des Lagers (2) an einem Gehäuse (13) der Ultraschall-Schweißeinrichtung (100) aufweist, wobei die Stützfläche (6) eine schiefe Ebene (12) aufweist, die ausgelegt ist, durch das Einwirken der Kraft (F) von der Sonotrode (101) auf den ersten Abschnitt (I) des Rahmens (3) in Richtung der Längsachse der Sonotrode (101) vom Kopf (103) der Sonotrode (101) weg entlang einer schiefen Ebene (14) des Gehäuses (13) zu gleiten.

10. Das Lager (2) nach irgendeinem der vorangehenden Ansprüche, wobei ein oder mehrere oder jeder der Vorsprünge (5a, 5b, 5c, 5d) des ersten und/oder zweiten Abschnitts (I, II) eine Auflagerfläche (11) zur Lagerung der Sonotrode (101) in der Öffnung (4) aufweist, wobei vorzugsweise der Linienkontakt mit der Sonotrode (101) an der Grenzfläche zwischen der Auflagerfläche (11) und der Oberfläche der Sonotrode (101) vorliegt.

11. Ein Kit (8) für eine Ultraschall-Schweißeinrichtung (100), umfassend:
das Lager (2) nach irgendeinem der vorangehenden Ansprüche; und
ein Begrenzungsmittel (7) zur Begrenzung von Bewegungen der Sonotrode (101) entlang der Längsachse der Sonotrode (101).

12. Eine Sonotrode (101) zur Verwendung mit, insbesondere zur Lagerung in, dem Lager (2) nach irgendeinem der vorangehenden Ansprüche 1 bis 10 oder zur Verwendung mit dem Kit (8) nach Anspruch 11, wobei vorzugsweise die Sonotrode (101) ein oder mehrere Aussparungen (9a) zur Aufnahme der Vorsprünge des ersten und/oder zweiten Abschnitts (II) und/oder eine Aussparung (9b) zur Aufnahme des Begrenzungsmittels (7) aufweist.

13. Eine Ultraschall-Schweißeinrichtung (100), umfassend:
das Lager (2) nach irgendeinem der Ansprüche 1-10 oder das Kit (8) nach Anspruch 11;
die Sonotrode (101) nach Anspruch 12;
ein Ambossträger (10); und
ein Amboss (1), der auf dem Ambossträger angeordnet ist;
wobei sich die Sonotrode (101) durch die Öffnung (4) des Lagers (2) hindurch erstreckt und von dem Rahmen (3) gelagert wird.

14. Verfahren zum Nachrüsten einer Ultraschall-Schweißeinrichtung, das Verfahren umfassend:
Entfernen von ein oder mehreren Befestigungsmitteln (1002), insbesondere Schrauben, von der Sonotrode (101) nach Anspruch 12, wobei die Befestigungsmittel (1002) ausgelegt sind, eine Bewegung der Sonotrode (101) in vertikaler Richtung und/oder horizontaler Richtung zu begrenzen und/oder eine Rotation der Sonotrode (101) um ihre Längsachse im Uhrzeigersinn und/oder gegen den Uhrzeigersinn zu begrenzen;
Anbringen des Lagers (2) nach einem der Ansprüche 1-10 oder des Kits (8) nach Anspruch 11 an einem Gehäuse (13) der Ultraschall-Schweißeinrichtung (100) derart,
dass die Sonotrode (101) durch die Öffnung (4) des Lagers (2) hindurchgeführt wird und von dem Rahmen (3) des Lagers (2) gelagert wird, wobei vorzugsweise das Begrenzungsmittel (7) an der Sonotrode (101) angebracht wird.

15. Verwendung des Lagers (2) nach irgendeinem der Ansprüche 1-10 oder des Kits (8) nach Anspruch 11 zum Lagern einer Sonotrode (101) einer Ultraschall-Schweißeinrichtung (100), vorzugsweise zum Lagern der Sonotrode (101) nach Anspruch 12.
